**Europäisches Patentamt**

**European Patent Office**

**Office européen des brevets**

(11) Veröffentlichungsnummer : **0 385 176 B1**

## (12) EUROPÄISCHE PATENTSCHRIFT

(45) Veröffentlichungstag der Patentschrift :
04.11.92 Patentblatt 92/45

(21) Anmeldenummer : **90102755.7**

(22) Anmeldetag : **13.02.90**

(51) Int. Cl.⁵ : **F16F 15/32**

(54) **Wuchtgewichtanordnung für Kreuzgelenkwellen.**

(30) Priorität : **28.02.89 DE 3906116**

(43) Veröffentlichungstag der Anmeldung :
**05.09.90 Patentblatt 90/36**

(45) Bekanntmachung des Hinweises auf die
Patenterteilung :
**04.11.92 Patentblatt 92/45**

(84) Benannte Vertragsstaaten :
**ES FR GB IT**

(56) Entgegenhaltungen :
**DE-A- 3 035 437**
**GB-A- 2 147 388**

(73) Patentinhaber : **GKN Cardantec International**
**Gesellschaft für Antriebstechnik mbH**
**Westendhof 5**
**W-4300 Essen 1 (DE)**

(72) Erfinder : **Schultze, Hans-Jürgen**
**Breukelmannhof 13**
**W-4300 Essen 11 (DE)**

(74) Vertreter : **Harwardt, Günther, Dipl.-Ing. et al**
**HARWARDT NEUMANN PATENTANWÄLTE**
**Scheerengasse 2 Postfach 1455**
**W-5200 Siegburg 2 (DE)**

**Beschreibung**

Die Erfindung betrifft eine Wuchtgewichtanordnung an einer rotierenden Welle, insbesondere einer Kreuzgelenkwelle, welche ein an einem Anschlußzapfen durch eine Schweißnaht befestigtes Verbindungsrohr aufweist und bei der das Wuchtgewicht einem separaten Befestigungsring zugeordnet ist.

Eine solche Anordnung ist beispielsweise aus der DE-A 23 48 629 bekannt. Der für die Befestigung der Wuchtgewichte gedachte Befestigungsring ist durch Verklemmung auf einer Sitzfläche der Gelenkgabel gehalten. Die Fixierung soll durch gegeneinander versetzte Lappen erfolgen. Bei einem weiteren Ausführungsbeispiel ist eine separate Festlegung über eine Schweißnaht vorgesehen. Die Wuchtgewichte sind im Ring durch Verklemmen gehalten. Die Anbringung eines Befestigungsringes, in dem einzelne Wuchtgewichte durch Klemmung gehalten werden, hat den Nachteil, daß ein solcher Vorgang nur mit einem erhöhten Kostenaufwand automatisierbar ist. Dies trifft sowohl für das Anbringen des Befestigungsringes selbst, als auch für die Gewichte zu.

Bei rotierenden Wellen, insbesondere Gelenkwellen, ist es bekannt, als Auswuchtgewichte Blechstreifen vorzusehen und diese durch Punktschweißung in der Nähe der Gelenke, insbesondere an dem Verbindungsrohr, vorzusehen.

Die Befestigung der Auswuchtgewichte bedeutet in fast allen Fällen eine Verminderung der Festigkeit des betroffenen Bauteiles, insbesondere wenn mehrere Schweißpunkte vorgesehen sind. Die Schweißpunkte bilden bei einem durchgehenden Blechstreifen Anrißpunkte unter Belastung. Darüberhinaus besteht die Gefahr, daß sich unter Drehmoment die Wuchtgewichte lösen, da eine Verformung stattfindet. Das Bauteil, an dem die Wuchtblechstreifen befestigt sind, wird aufgrund der Drehmomentübertragung tordiert und erfährt eine Verformung, welche sich auch auf die Befestigungspunkte für den Blechstreifen überträgt und diese auf Scherung beansprucht.

Hiervon ausgehend liegt der Erfindung die Aufgabe zugrunde, ein Wuchtgewicht für Kreuzgelenkwellen vorzuschlagen, das keinen negativen Einfluß bei Befestigung auf der einem Drehmoment unterliegenden rotierenden Welle hinsichtlich der Dauerfestigkeit der Welle selbst und hinsichtlich der Befestigung der Wuchtgewichte ausübt. Insbesondere soll die Dauerfestigkeit erhöht werden.

Diese Aufgabe wird erfindungsgemäß dadurch gelöst, daß der konzentrisch zum Verbindungsrohr angeordnete Befestigungsring eine Stirnfläche aufweist, die in einer Ebene mit der Stirnfläche des Verbindungsrohres angeordnet ist, daß der Befestigungsring zumindest in dem an die Stirnfläche angrenzenden Bereich auf der Außenfläche des Verbindungsrohres geführt ist, daß das Verbindungsrohr und der Befestigungsring durch eine einzige gemeinsame Schweißnaht mit dem Anschlußzapfen verbunden sind, und daß das/die als Blechstreifen ausgebildeten Wuchtbleche mit der Außenfläche des Befestigungsringes verbunden sind.

Durch die Zuordnung der Wuchtbleche zu einem separaten Befestigungsring sind die an der Drehmomentübertragung beteiligten Bauteile nicht mehr von den aus der Anbringung von Wuchtblechen, beispielsweise durch Punktschweißung, resultierenden Nachteilen der Bildung von Spannungsrissen betroffen.

Darüberhinaus ist eine einfache und automatisierte Herstellung möglich, da der Befestigungsring zusammen mit dem Verbindungsrohr in einem Arbeitsgang mit dem Anschlußzapfen durch Schweißen verbunden werden kann. Darüberhinaus ergibt sich durch eine solche Anordnung auch insgesamt eine Verbesserung der Schweißnahtqualität für die Verbindung zwischen Verbindungsrohr und Anschlußzapfen, weil durch die Nahtüberhöhung im Übergangsbereich Zapfen/Rohr die äußere Randkerbe entfällt. Somit ist bei dynamisch hoch beanspruchten Bauteilen durch Reduzierung der Kerbschärfe mit höheren Lastspielzahlen zu rechnen.

Zur weiteren Ausgestaltung ist vorgesehen, daß das/die Wuchtbleche durch Punkt- oder Buckelschweißung mit dem Befestigungsring verbunden sind. Bevorzugt ist zur Verbindung nur ein einzelner Schweißpunkt oder ein einzelner Schweißbuckel je Wuchtblech vorgesehen.

Zur Vermeidung von Unterrostung ist vorgesehen, daß der Befestigungsring anschließend an den auf dem Verbindungsrohr geführten Führungsabschnitt einen zur Außenfläche des Verbindungsrohres konzentrisch beabstandeten Befestigungsabschnitt für die Wuchtbleche aufweist. Dies hat auch noch den Vorteil, daß bei der Befestigung beispielsweise von Wuchtblechen durch Schweißen keine Wärme in den Bereich unterhalb der Schweißbefestigung in das Verbindungsrohr überfließen und zu einer Festigkeitsverminderung führen kann.

Für den Fall, daß eine nur geringe axiale Baulänge zur Verfügung steht, wird nach der Erfindung vorgeschlagen, daß der Befestigungsring einen konzentrisch zum Führungsabschnitt zu seiner Standfläche zurückgestülpt verlaufenden Befestigungsabschnitt aufweist.

Es ist auch denkbar, daß zur Reduzierung der Materialstärke des Befestigungsringes axial anschließend an dessen Befestigungsabschnitt ein weiterer, an der Außenfläche des Verbindungsrohres anliegender Führungsabschnitt vorgesehen ist.

Zur Vermeidung von Geräuschen oder Unterrostung kann in weiterer Ausgestaltung vorgesehen sein, daß der Freiraum zur Außenfläche des Verbindungsrohres mit einem Kunstharzschaum ausgefüllt ist.

Dies trifft auch für den Freiraum zwischen dem Führungsabschnitt und dem Befestigungsabschnitt des Befestigungsringes zu.

Die erfindungsgemäße Lehre ist auf Rotoren allgemein anwendbar, welche einer Drehmomentbelastung unterworfen sind.

Bevorzugte Ausführungsbeispiele der Erfindung sind in der Zeichnung schematisch dargestellt.

Es zeigt

Figur 1 eine Kreuzgelenkwelle, teilweise geschnitten und

Figur 2 - 5 verschiedene Ausführungsformen der Ausgestaltung des Befestigungsringes als Einzelheit im vergrößerten Maßstab.

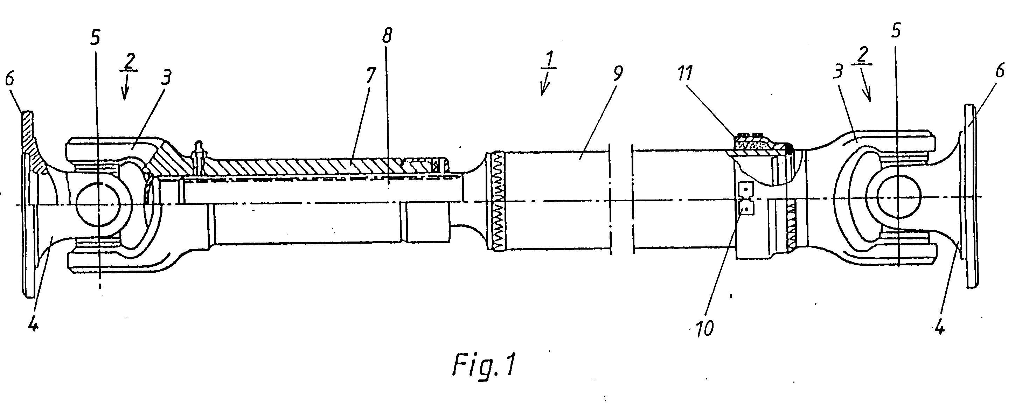

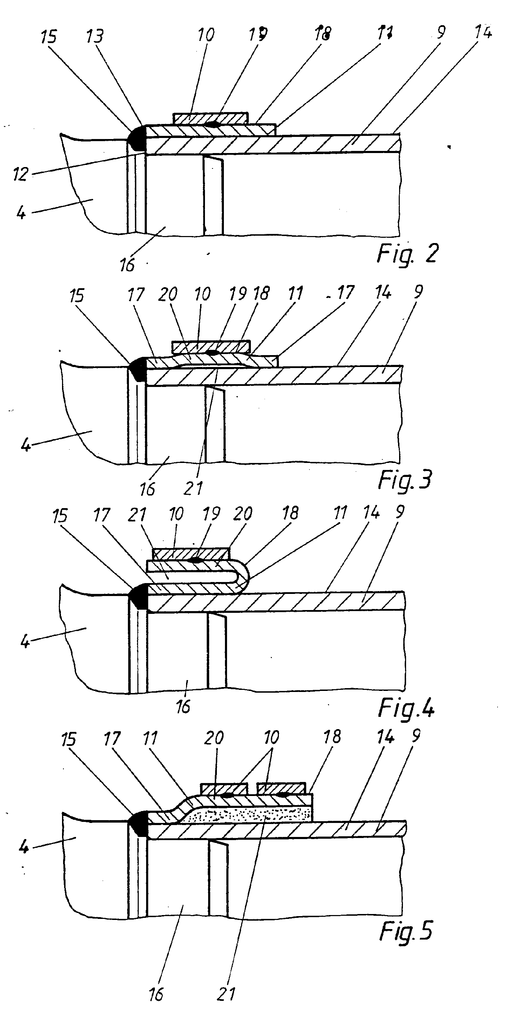

In den Figuren 1 und 2 ist eine Kreuzgelenkwelle 1 dargestellt, welche mit Wuchtblechen 10 nach der Erfindung versehen ist. Die Kreuzgelenkwelle 1 besteht aus zwei Kreuzgelenken 2, welche durch eine Verbindungswelle miteinander drehfest, aber eine Relativverstellung zulassend verbunden sind. Die Kreuzgelenke 2 bestehen aus einer inneren Gelenkgabel 3 und einer äußeren Gelenkgabel 4. Die beiden Gelenkgabeln 3,4 sind über ein Gelenkkreuz 5 miteinander scharnierbar in zwei Ebenen verbunden. Die äußere Gelenkgabel 4 besitzt einen Flansch 6, der zum Anschluß an ein treibendes oder getriebenes Maschinenteil oder Fahrzeugteil dient. Die beiden inneren Gelenkgabeln 3 sind mit Bauteilen, die zur Verbindungswelle gehören, verbunden. So ist eine der inneren Gelenkgabeln 3 Bestandteil eines Verschiebaußenteils 7, welches in seiner Bohrung ein Keilprofil aufweist, in welchem ein Verschiebeinnenteil 8, das eine dazu passende Keilverzahnung auf seiner Außenfläche aufweist, drehfest aber axial verschiebbar aufgenommen ist. Unter Zwischenschaltung eines Verbindungsrohres 9 ist das Verschiebeinnenteil 8 mit der anderen Innengabel 3 verbunden. Das Verbindungsrohr 9 dient in der Regel zur Anpassung der Länge der Kreuzgelenkwelle 1 an den jeweiligen Anwendungsfall. Die Kreuzgelenkwelle 1 wird nach der Montage gewuchtet, um die erforderliche Rundlaufqualität, die für den jeweiligen Anwendungsfall gefordert ist, zu erreichen. Hierzu dienen Gewichte in Form von Wuchtblechen 10, von denen vorzugsweise eines oder mehrere dem Verbindungsrohr 9 oder dem Verschiebeaußenteil 7 zugeordnet werden.

Wie aus den Figuren 2 bis 5 ersichtlich, besitzt die Gelenkgabel 4 einen Anschlußzapfen 16, mit welchem das Verbindungsrohr 9 durch Schweißung zu verbinden ist. Konzentrisch zum Verbindungsrohr 9 ist auf dessen Außenfläche 14 der Befestigungsring 11 anliegend angeordnet. Die Stirnflächen 12 des Verbindungsrohres 9 und die Stirnfläche 13 des Befestigungsringes 11 liegen in einer Ebene. Beide sind in allen Ausführungsbeispielen der Figuren 2 bis 5 über eine einzige, gemeinsame Schweißnaht 15 mit dem Anschlußzapfen 16 der Gelenkgabel 4 verbunden.

Beim Ausführungsbeispiel nach Figur 2 ist der Befestigungsring 11 als Rohrabschnitt ausgebildet, der mit seiner Bohrung insgesamt flächig auf der Außenfläche 14 des Verbindungsrohres 9 aufliegt. Das Wuchtblech 10 ist über einen Schweißpunkt 19 auf der Außenfläche 18 des Befestigungsringes 11 befestigt.

Beim Ausführungsbeispiel nach Figur 3 weist der Befestigungsring 11 einen ersten Führungsabschnitt 17 auf, welcher der Stirnfläche 13 benachbart ist. Der hieran anschließende Befestigungsabschnitt 20 des Befestigungsringes 11 entfernt sich von der Außenfläche 14 des Verbindungsrohres 9. Anschließend an den Befestigungsabschnitt 20 ist ein weiterer Führungsabschnitt 17 vorgesehen, welcher widerum zur Führung auf der Außenfläche 14 des Verbindungsrohres 9 dient. Zwischen den beiden Führungsabschnitten 17 ist auf der Außenfläche 18 des Befestigungsabschnittes 20 das Wuchtblech 10 durch einen Schweißpunkt 19 angebracht.

Durch die Entfernung des Befestigungsabschnittes 20 von der Außenfläche 14 des Verbindungsrohres 9 wird bei der Durchführung der Punktschweißung vermieden, daß Wärme in das Verbindungsrohr 9 fließen und zu einer örtlichen Herabsetzung der Festigkeit führen kann. Es ist denkbar, den Freiraum 21, der zwischen der Außenfläche 14 und der Innenfläche des Befestigungsabschnittes 20 gebildet wird, durch einen Schaum, z.B. einen Kunstharzschaum, auszufüllen, um die Bildung von Unterrostung zu vermeiden.

In Figur 4 ist eine Ausführungsform dargestellt, bei der anschließend an den Führungsabschnitt 17 der Befestigungsabschnitt 20 durch eine Zurückstülpung dieses Abschnittes in Richtung auf die Stirnfläche 13 zu gebildet wird. Die Außenfläche 18 dient zur Befestigung der Wuchtgewichte 10 beispielsweise durch einen Schweißpunkt 19. Der Freiraum, der sich zwischen den beiden Abschnitten, nämlich dem Führungsabschnitt 17 und dem konzentrisch dazu angeordneten Befestigungsabschnitt 20 ergibt, ist mit 21 gezeichnet und kann beispielsweise durch einen Kunstharzschaum ausgefüllt werden.

In Figur 5 ist eine Ausführungsform dargestellt, bei der der Befestigungsring 11 zunächst einen auf der Außenfläche 14 des Verbindungsrohres 9 anliegenden Führungsbereich 17 in der Nähe bzw. Nachbarschaft zur Schweißnaht 15 aufweist. Axial hiervon ausgehend ist ein erweiterter Bereich vorgesehen, der den Befestigungsabschnitt 20 darstellt und einen Spalt in Form des Freiraumes 21 bis zur Außenfläche 14 des Verbindungsrohres 9 freiläßt. Wie aus der Figur 5 ersichtlich, ist die axiale Länge des Befestigungsringes 11 so bemessen, daß beispielsweise zwei Reihen von Wuchtblechen 10 nebeneinander angeordnet werden können. Es ist ebenfalls erkennbar, daß der Freiraum 21 durch einen Kunstharzschaum ausgefüllt ist, um die Rostbildung zu verhindern.

## Patentansprüche

1. Wuchtgewichtanordnung an einer rotierenden Welle, insbesondere einer Kreuzgelenkwelle (1), welche ein an einem Anschlußzapfen durch eine Schweißnacht (15) befestigtes Verbindungsrohr (9) aufweist und bei der das Wuchtgewicht einem separaten Befestigungsring (11) zugeordnet ist, dadurch gekennzeichnet, daß der konzentrisch zum Verbindungsrohr (9) angeordnete Befestigungsring (11) eine Stirnfläche (13) aufweist, die in einer Ebene mit der Stirnfläche (12) des Verbindungsrohres (9) angeordnet ist, daß der Befestigungsring (11) zumindest in dem an die Stirnfläche (13) angrenzenden Bereich auf der Außenfläche (14) des Verbindungsrohres (9) geführt ist, daß das Verbindungsrohr (9) und der Befestigungsring (11) durch eine einzige gemeinsame Schweißnaht (15) mit dem Anschlußzapfen (16) verbunden sind, und daß das/die als Blechstreifen ausgebildeten Wuchtbleche (10) mit der Außenfläche (18) des Befestigungsringes (11) verbunden sind.

2. Wuchtgewichtanordnung nach Anspruch 1, dadurch gekennzeichnet, daß das/die Wuchtbleche (10) durch Punkt- oder Buckelschweißung (19) mit dem Befestigungsring (11) verbunden sind.

3. Wuchtgewichtanordnung nach Anspruch 2, dadurch gekennzeichnet, daß zur Verbindung ein Schweißpunkt (19) oder Schweißbuckel je Wuchtblech (10) vorgesehen ist.

4. Wuchtgewichtanordnung nach Anspruch 1, dadurch gekennzeichnet, daß der Befestigungsring (11) anschließend an den auf dem Verbindungsrohr (9) geführten Führungsabschnitt (17) einen zur Außenfläche (14) des Verbindungsrohres (9) konzentrisch beabstandeten Befestigungsabschnitt (20) für die Wuchtbleche (10) aufweist.

5. Wuchtgewichtanordnung nach Anspruch 1, dadurch gekennzeichnet, daß der Befestigungsring (11) einen konzentrisch zum Führungsabschnitt (17) zu seiner Stirnfläche (13) zurückgestülpt verlaufenden Befestigungsabschnitt (20) aufweist.

6. Wuchtgewichtanordnung nach Anspruch 4, dadurch gekennzeichnet, daß axial anschließend an den Befestigungsabschnitt (20) ein weiterer an der Außenfläche (14) des Verbindungsrohres (9) anliegender Führungsabschnitt (17) vorgesehen ist.

7. Wuchtgewichtanordnung nach Anspruch 4, dadurch gekennzeichnet, daß der Freiraum (21) zur Außenfläche (14) des Verbindungsrohres (9) mit einem Kunstharzschaum ausgefüllt ist.

8. Wuchtgewichtanordnung nach Anspruch 5, dadurch gekennzeichnet, daß der Freiraum (21) zwischen dem Führungsabschnitt (17) und dem Befestigungsabschnitt (20) des Befestigungsringes (11) mit einem Kunstharzschaum ausgefüllt ist.

## Claims

1. A balancing weight assembly of a rotating shaft, especially a propeller shaft (1) provided with universal joints, which comprises a connecting tube (9) secured to a connecting journal by a weld (15) and in the case of which the balancing weight is associated with a separate fixing ring (11), characterised in that the fixing ring (11) arranged concentrically relative to the connecting tube (9) comprises an end face (13) arranged in the same plane as the end face (12) of the connecting tube (9); that at least in the region adjoining the end face (13), the fixing ring (11) is guided on the outer face (14) of the connecting tube (9); that the connecting tube (9) and the fixing ring (11) are connected to the connecting journal (16) via one single common weld (15); and that the balancing plate(s) (10) designed as (a) plate metal strip(s) are connected to the outer face (18) of the fixing ring (11).

2. A balancing weight assembly according to claim 1, characterised in that the balancing plate(s) (10) is (are) connected to the fixing ring (11) by a spot or projection weld (19).

3. A balancing weight assembly according to claim 2, characterised in that, for connecting purposes, a weld point (19) or weld projection is provided for each balancing plate (10).

4. A balancing weight assembly according to claim 1, characterised in

that in the region adjoining the guiding portion (17) guided on the connecting tube (9), the fixing ring (11) comprises a fixing portion (20) for the balancing plates (10) which is spaced concentrically relative to the outer face (14) of the connecting tube (9).

5. A balancing weight assembly according to claim 1,

characterised in

that the fixing ring (11) comprises a fixing portion (20) which extends concentrically relative to the guiding portion (17) and is turned over towards its end face (13).

6. A balancing weight assembly according to claim 4,

characterised in

that in the region axially adjoining the fixing portion (20), there is provided a further guiding portion (17) abutting the outer face (14) of the connecting tube (9).

7. A balancing weight according to claim 4,

characterised in

that the free space (21) towards the outer face (14) of the connecting tube (9) is filled with a foam of synthetic resin.

8. A balancing weight assembly according to claim 5,

characterised in

that the free space (21) between the guiding portion (17) and the fixing portion (20) of the fixing ring (11) is filled with a foam of synthetic resin.

## Revendications

1. Agencement de poids d'équilibrage sur un arbre tournant, notamment sur un arbre à joints de cardan (1), présentant un tube de liaison (9) fixé à un téton de raccordement par une soudure (15), cet agencement étant tel que le poids d'équilibrage se trouve conjugué à une bague de fixation séparée,

caractérisé

par le fait que la bague de fixation (11) disposée concentriquement au tube de liaison (9) présente une surface en bout (13) qui est située dans le même plan que la surface en bout (12) du tube de liaison (9), par le fait qu'au moins dans la région bordant la surface en bout (13), la bague de fixation (11) est guidée sur la surface extérieure du tube de liaison (9), par le fait que le tube de liaison (9) et la bague de fixation (11) sont assemblés-liés au téton de raccordement (16) par une seule soudure commune (15), et par le fait que la ou les tôle(s) d'équilibrage (10) réalisée(s) sous forme de bande(s) de tôle est(sont) assemblée(s)-liée(s) à la surface extérieure (18) de la bague de fixation (11).

2. Agencement de poids d'équilibrage selon revendication 1, caractérisé par le fait que la ou les tôle(s) d'équilibrage (10) est(sont) fixée(s) à la bague de fixation (11) par une ou des soudure(s) par point(s) ou par bossage(s) (19).

3. Agencement de poids d'équilibrage selon revendication 2, caractérisé par le fait qu'il est prévu, pour la fixation, un bossage ou un point de soudure (19) pour chaque tôle d'équilibrage (10).

4. Agencement de poids d'équilibrage selon revendication 1, caractérisé par le fait qu'à la suite de la partie guide (17) guidée sur le tube de liaison (9), la bague de fixation (11) présente, pour la fixation des tôles d'équilibrage (10), une partie fixation (20) écartée de la surface extérieure (14) du tube de liaison (9) à laquelle elle est concentrique.

5. Agencement de poids d'équilibrage selon revendication 1, caractérisé par le fait que la bague de fixation (11) présente une partie fixation (20) qui est retroussée vers sa surface en bout et s'étend concentriquement à la partie guide (17).

6. Agencement de poids d'équilibrage selon revendication (4), caractérisée par le fait qu'une autre partie guide (17) adjacente à la surface extérieure (14) du tube de liaison (9) succède axialement à la partie fixation ((20).

7. Agencement de poids d'équilibrage selon revendication 4, caractérisé par le fait que l'espace libre (21) jusqu'à la surface extérieure (14) du tube de liaison (9) est comblé avec une mousse de résine synthétique.

8. Agencement de poids d'équilibrage selon revendication 5, caractérisé par le fait que l'espace libre (21) entre la partie guide (17) et la partie fixation (20) de la bague de fixation (11) est comblé avec une mousse de résine synthétique.

Fig.1

Fig. 2

Fig. 3

Fig.4

Fig. 5